Europäisches Patentamt

European Patent Office

Office européen des brevets

(19)

(11) EP 1 300 804 A2

(12) EUROPEAN PATENT APPLICATION

(43) Date of publication:
09.04.2003 Bulletin 2003/15

(51) Int Cl.7: G06T 7/40

(21) Application number: 02021835.0

(22) Date of filing: 27.09.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 05.10.2001 KR 2001061336

(71) Applicant: LG ELECTRONICS INC.
Seoul (KR)

(72) Inventors:
• Lee, Jin Soo
Songpa-gu, Seoul (KR)

• Yu, Jae Shin
Gwanak-gu, Seoul (KR)
• Kim, Heon Jun
Seongnam-si, Gyeonggi-do (KR)

(74) Representative: Vetter, Ewald Otto et al
Meissner, Bolte & Partner
Anwaltssozietät GbR
(Depotstrasse 5 1/2,
86199 Augsburg),
Postfach 10 26 05
86016 Augsburg (DE)

(54) **Face detecting method by skin color recognition**

(57) The present invention is provided a face detecting method depending on image that includes a step of obtaining a color group mainly distributed in a given image; a step of designating a color group corresponding to a human color in the obtained color groups; and a step of segmenting a portion composed with pixels corresponding to color group of a human color.

Here, a step of cognizing a face can be further included.

Further, the step of obtaining mainly distributed color groups comprises a step of composing a color histogram of the image; a step of obtaining an bin ($b_{max}$) having the maximum bin value of the color histogram; a step of measuring similarity between a representative color value of the $b_{max}$ and a representative color value of other respective bins; a step of designating the range of color of a main color by using bins, where measured similarity is below a critical value, and $b_{max}$; and a step of designating a representative color of the main color.

Also, a step of detecting bin corresponding to the extracted main color from the color histogram, a step of calculating the maximum bin for the rest of bins, and a step of designating a main color group in addition when the maximum bin is above a critical value are further comprised.

FIG. 1

```
        Start
          │
   Input an image ──── S101
          │
  Main color grouping ──── S102
          │
  Designating a color
  group of a human color ──── S103
          │
  Detecting a portion of
  a human color ──── S104
          │
  Cognizing a face ──── S105
          │
         End
```

EP 1 300 804 A2

**Description**

**BACKGROUND OF THE INVENTION**

1. Field of the Invention

The present invention relates to an image processing method, and more particularly to face detecting method depending on image capable of effectively detecting a face by skin color in a moving picture process system and an image communication system, such as VOD (Video On Demand), and PVR (Personal Video Recorder).

2. Description of the Related Art

These days, the technique for detecting a face is significantly used in various application fields. In a moving picture service field such as VOD/PVR, the section of face appearance is cognized as an important section, and technique for detecting a face is used to perform video indexing by using this.

Further, in an image communication using PC (Personal Computer) camera or an IMT2000 service capable of an image transmission, an only face is encoded by high bit-rate through detecting a face, so that technique for detecting a face is used in an object based coding technique capable of maintaining high image quality at low bit-rate, in general.

As described above, since a face detecting technique is used in various fields, a lot of works related to automatically detecting a face have been reported.

Then, typical method of face detecting method is to use the information of a skin color. That is, it is the method that a face is detected by designating pixel of only human color as a face candidate.

However, analyzing color of a portion having a human color in images of a person obtained from various places and by manifold cameras, there are displayed various colors per respective images. That is, since a face is displayed in great variety in accordance with an image, if it is tried to predetermine a range of a human color, the range becomes too broad, so that case of an image including portions except human color can be increased. Therefore, it is difficult to use a face detecting method using the range of a human color. The reason is in the following.

(1) color distortion due to illumination.

The range of a human color changes in accordance with illumination. Specifically, brightness changes greatly in accordance with illumination because brightness is very sensitive to color.

(2) color distortion due to device for taking an image

Although images are taken from same places and at same illuminations, colors are different from each other because of device for taking an image. For example, in case of PC camera, a white color is displayed by different color such as blur color or green color rather than pure vrhite color because of distortion due to the illumination of camera. The reason is that color is distorted or changed by the unique characteristic of each device for taking an image.

(3) color distortion due to device for regenerating an image

A color is also distorted by the characteristic of device used for receiving an image and regenerating the image, such as video card of PC.

Like this, as the face detecting method using a skin color has problems of (1), (2), and (3) described above, in order to solve the problems, lots of researches of face detecting method using an information except a skin color have been reported.

In one of those methods, after roughly grouping a set of a human face images composed in advance into some groups in accordance with the characteristic of a human face, templates of a human face every groups are formed by segmenting some groups in accordance with an angle again. Then, composed template is scanned and matched to total portion of image by regulating the size from minimum size of template to maximum size of template.

However, in this method, since the number of matching is so great, though the size is small, there is problem of a lot of processing time. Thus, though accuracy is good, it is difficult to real-time process.

**SUMMARY OF THE INVENTION**

An object of the present invention is to solve the problems described above, and more particularly to provide a face detecting method depending on image having a very high speed of processing and more than high accuracy, in relation to detecting a face in the moving picture process system, such as VOD (Video On Demand), PVR (Personal Video Recorder), and video communication system.

Accordingly, to achieve the above-described objects, there is provided a face detecting method depending on image that includes:

> a step of obtaining a color group mainly distributed in a given image;
> a step of designating a color group corresponding to a human color in the obtained color groups; and
> a step of segmenting a portion composed with pixels corresponding to color group of a human color.

Here, a step of cognizing a face can be further included.

Further, the step of obtaining mainly distributed color groups comprises a step of composing a color histogram of the image; a step of obtaining an bin ($b_{max}$) having the maximum bin value of the color histogram; a step of measuring similarity between a representative color value of the $b_{max}$ and a representative color value of other respective bins; a step of designating the range of color of a main color by using bins, where measured similarity is below a critical value, and $b_{max}$; and a step of designating a representative color of the main color.

Also, a step of detecting bin corresponding to the extracted main color from the color histogram, a step of calculating the maximum bin for the rest of bins, and a step of designating a main color group in addition when the maximum bin is above a critical value are further comprised.

Further, in the step of designating a color group corresponding to the portion of a human color of the obtained color groups, if the representative color of the obtained color group belongs to the predetermined range of a human color, the representative color is designated as color group of a human color portion.

Moreover, the predetermined range of a human color is judged as a human color when B > G, G > 100, and B+15 < R < B+50 where a color coordinate is RGB and ranges of each coordinates of R, G, and B belong between 0 and 255, respectively, and is also judged as a human color when G > B, B > 100, and G+15 < R < G+50 where a color coordinate is RGB and ranges of each coordinates of R, G, and B are between 0 and 255, respectively.

Also, the predetermined range of a human color is judged as a human color when 134 < Cb < 155, 91 < Cr < 142, and 60 < Y < 230, where color coordinate is YCrCb and can be expressed by 24 bits.

Further, in the step of cognizing a face, the segmented portion composed of detected pixels is compared with the face template, so that it is decided whether the segmented portion corresponds to a face or not.

Further, in the step of cognizing a face, it is characterized by judging the segmented portion as a face when the size of the segmented portion and the aspect ratio meet a condition within a desired range.

Also, in cognizing a face, it is characterized by judging a segmented portion under a critical value as an anti-face, and by deleting a portion under the critical value by using an opening morphology technique in deleting the portion under the critical value.

According to the present invention, in a moving picture process system and an image communication system, such as VOD (Video On Demand), and PVR (Personal Video Recorder), it is advantageous to effectively detect a face by adaptively designating a range of a human color suitable for a given image after analyzing a color distribution in the given image, and by using a skin color.

In general, ranges of a human colors displayed in the image are much various in accordance with a camera condition and a camera apparatus. However, the color distribution of a human color pixel comprising a person in an image frame is concentrated at a narrow range. The reason is that since the same illumination and the same camera apparatus are used in a frame, for an object of one frame, the human color is displayed in a certain range.

But, although the human color is represented within a certain range, because the range of a human color is changed in accordance with frames, it is difficult to automatically judge how a color coordinate is designated within a range, for a given frame, in order to detect the optimum portion of a human color. In this invention, there is provided a face detecting method that a face can be rapidly and effectively detected by designating a color group corresponding to a portion of a human color as a range of a human color of a currently given image after obtaining a main color group by analyzing a color distribution in the given image frame, and by adaptively applying a range of a human color depending on an image.

**BRIEF DESCRIPTION OF THE DRAWINGS**

The above and other objects, features and other advantages of the present invention will be more clearly understood from the following detailed description taken in conjunction with the accompanying drawings, in which:

> Fig. 1 is a flowchart showing a process for detecting a face in an image by a face detecting method depending on an image according to the present invention;

Fig. 2 is a flowchart showing a grouping process of a main color of an input image, in a face detecting method depending on an image according to the present invention;

Figs. 3a through 5c are diagrams showing examples of images represented with an only human color by designating an input image, an image displayed with a portion corresponding to the main color group, and a human color group, respectively, in a face detecting method depending on an image according to the present invention; and

Figs. 6a through 6d are a diagram for explaining a general opening morphology technique.

## DESCRIPTION OF THE PREFERRED EMBODIMENTS

Hereinafter, an embodiment according to the present invention will be described in detain with reference to the accompanying drawings.

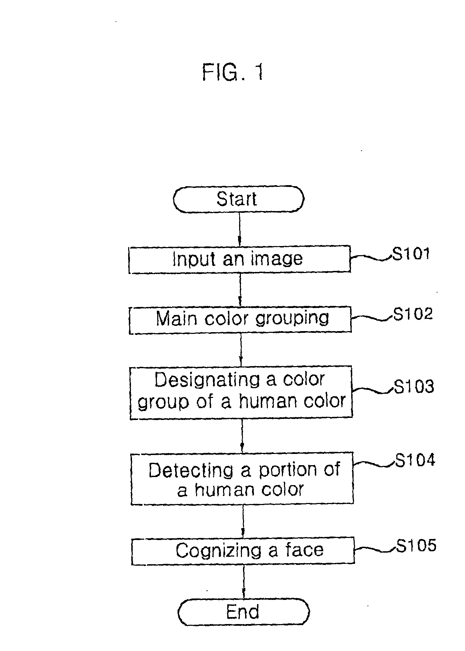

Fig. 1 is a flowchart showing a process for detecting a face in an image by a face detecting method depending on an image according to the present invention.

As shown in Fig. 1, a face detecting method depending on an image according to the present invention comprises a step of entering an image (step 101), a step of main color grouping (step 102), a step of designating a color group of human color (step 103), and a step of detecting a color portion of human color, and a step of cognizing a face may be further comprised.

At this time, the image input in step 101 may be a stop picture or a frame of a moving picture. Then, the step of main color grouping of the step 102 is the step of automatically analyzing the distributed range of the main color group by analyzing the color distribution of the input image of the step 101.

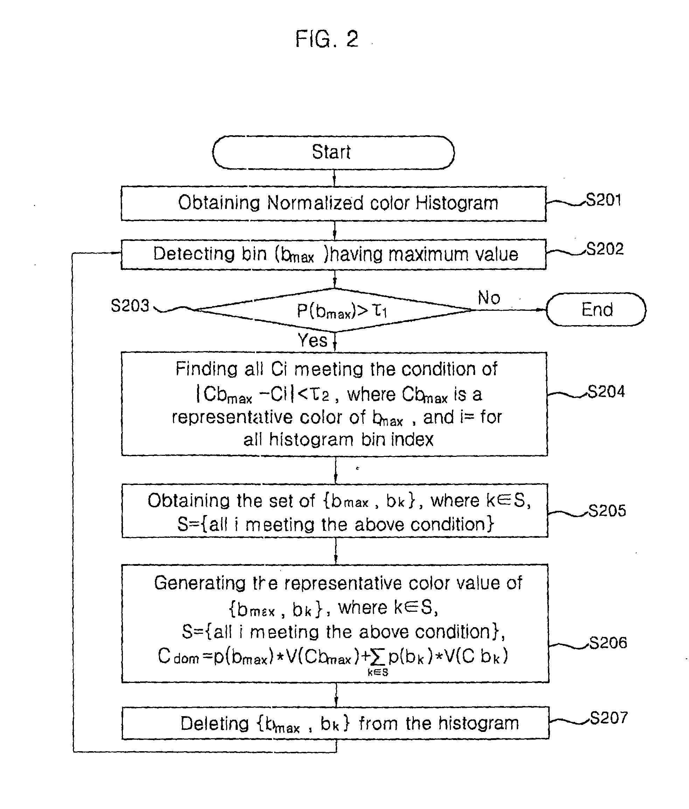

Such main color analyzing process of the step 102 will be described in detail with reference to Fig. 2.

Fig. 2 is a flowchart showing a grouping process of a main color of an input image, in a face detecting method depending on an image according to the present invention.

Explaining the main color grouping process for the input image with reference to the Fig. 2, first, a color space is transformed into a HSV for input image of the stop picture or the moving picture, and a color value is quantized. Then, for the quantized color value, a color histogram is obtained, and the color histogram value is normalized through a normalizing process (step 201).

Then, referring to the normalized color histogram obtained in the step 201, the maximum $b_{max}$ is detected in bins of the detected color histogram (step 202). In this time, it is judged whether the ratio of the detected $b_{max}$ is above a predetermined critical value ($\tau_1$) or not (step 203).

As a result of the judgment of the step 203, if the ratio of the detected $b_{max}$ is above the predetermined critical value ($\tau_1$), the representative color value of the current detected bin is judged as a main color of the input image, and an algorithm of color grouping using the main color is performed (process after the step 204). Further, as a result of the judgment of the step 203, if the ratio of the detected $b_{max}$ is not above the predetermined critical value ($\tau_1$), the representative color is judged to be nonexistent, and a performing of the process for main color grouping is finished.

On the other hand, as a result of the judgment of the step 203, for the $b_{max}$ the ratio of which is judged to be above the critical value ($\tau_1$), the similarity between bins of all color histograms and the representative color value of the current detected $b_{max}$ is calculated (step 204).

At this time, the method for calculating the similarity between bins of color histograms and the representative color value of the $b_{max}$ is to use the method for calculating a difference between a representative color value of each bin and the representative color value of the $b_{max}$. Then, a medium color value in the range of color signified by each bin comprising the color histogram is used as the representative color value of each bin. Thus, the representative color value is earlier decided in the process for quantizing the HSV color coordinate in order to obtain the color histogram.

Then, through the similarity calculation, all bins, where the difference between a representative color value of each bin and the representative color value of the $b_{max}$ is below a predetermined critical value ($\tau_2$), are detected. As a result, a set of bins $b_k$ having a color value similar to the detected $b_{max}$ is obtained, and a set of $\{b_{max}, b_k\}$ is obtained (step 205).

Here, $b_k$ is a set of bins having a color value similar to the $b_{max}$ ($\{b_{max}, b_k\}$, where k S, S={all bins where the difference between $Cb_{max}$ and the representative color value is below a predetermined critical value ($\tau_2$)}). Then, a new main color is generated by using the representative color value of such $b_{max}$ and a set of $b_k$ (step 206).

In this time, the method for generating the new main color is as follow.

$$C_{dom} = p(b_{max}) * V(Cb_{max}) + \sum_{k \in S} p(b_k) * V(C\, b_k),$$

where,

$b_{max}$: maximum bin in the color histogram,

$b_k$: ith bin in the color histogram,

$Cb_{max}$: the representative color value of the maximum bin,

$Cb_k$: the representative color value of ith bin of the color histogram,

$C_{dom}$: a new main color value,

v(x): a vector value of x,

p(x): a probability of x, that is, bin value of the histogram.

Here, the ratio of bin and the representative color value of the bin are reflected in the obtained new main color. Since the ratio of bin is reflected, it is known that what color value is much included in the main entire image. At this time, the new main color is transformed into the original color space in order to display the representative color value (for example, R, G, B). Then, after deleting a detected $b_{max}$ and the bin of the set of $b_k$ from the current image (step 207), steps after the step 202 of detecting a bin ($b_{max}$) having the maximum value in the histogram are repeatedly performed.

The calculation for grouping of such main color is repeatedly performed till the ratio of $b_{max}$ having the maximum value is below the particular critical value ($\tau_1$). In the detecting the main color, the number of a detecting can be controlled by inputting the critical value ($\tau_1$) and the desired number of color value.

Through such steps, after the main color grouping for the input image is performed, the step of designating a color group of a human color, which designates a group where the range of color in the designated main color group belongs to the portion of the human color, is performed (step 103).

At this time, the portion of a human color defined in advance uses the range defined after statistically aralyzing the set of the studying human color data, as used in a conventional technique. Like this, after designating broad range of a human color by using the set of the human color date provided in advance, the designation of the human color group is performed by designating the color group, which corresponds to the range of a human color in the color group obtained in the main color grouping step of the step 102, as a group of a human color. In this time, the range of the new designated human color is narrower than that of the conventional human color, thereby suitable for detecting the portion of the human color in the input image.

However, in the embodiment of the present invention, the ranges of the human color in the RGB color coordinate and in the YcrCb color coordinate are designated as follow.

<RGB color coordinate>

IF (((b>g) && (g>100) && (r>b+15) && (r<b+50)) ∥ ((g>b) && (b>100)

&& (r>g+15) && (r<g+50)))

THAN SKIN COLOR.

<YcrCb color coordinate>

IF ((Cb>134 && Cb<155 && Cr<91 && Cr<142) && Y>60 && Y<230)

THAN SKIN COLOR

Then, a skin portion can be detected by detecting only the pixel of the human color by using the new designated range of the human color (step 104).

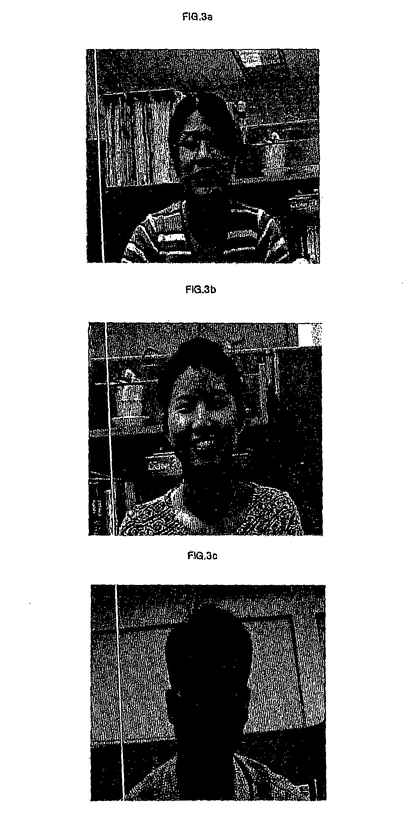

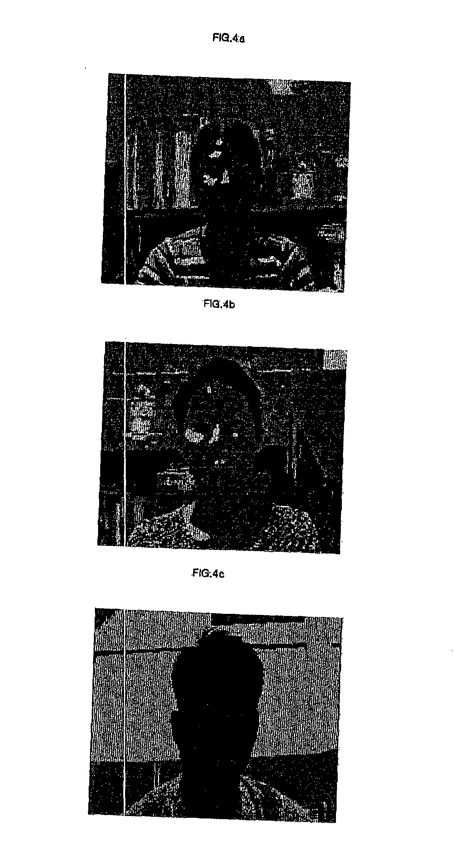

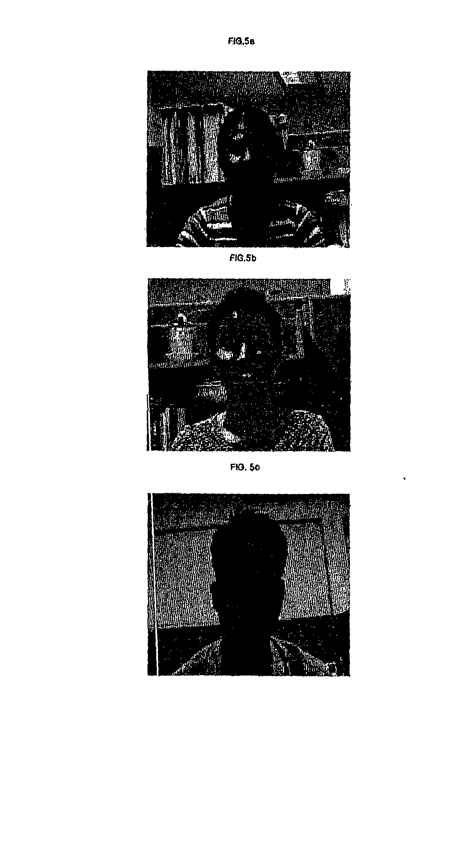

An example of detecting a face through such steps is showed in Figs. 3a-5c. Figs. 3a-3c show an original input image, and Figs. 4a-4c show an example displaying a portion corresponding to the main color group through color grouping process for the input image shown in Figs. 3a-3c. Then, Figs. 5a-5d show an example displaying an only portion of a human color by designating a group of a human color in the main color groups shown in Figs. 4a-4c. As shown in Figs., it can be known that a face can be displayed enough to meet a suitable segmentation into a main color.

On the other hand, in the step of segmenting a portion in accordance with the color group of a human color, since a portion that belongs to an anti-face may be detected together, a step of cognizing a face can be further required.

The step of cognizing a face can be performed by using a general method, such as an opening morphology technique for deleting a portion of the detected human color portions under a critical value in size.

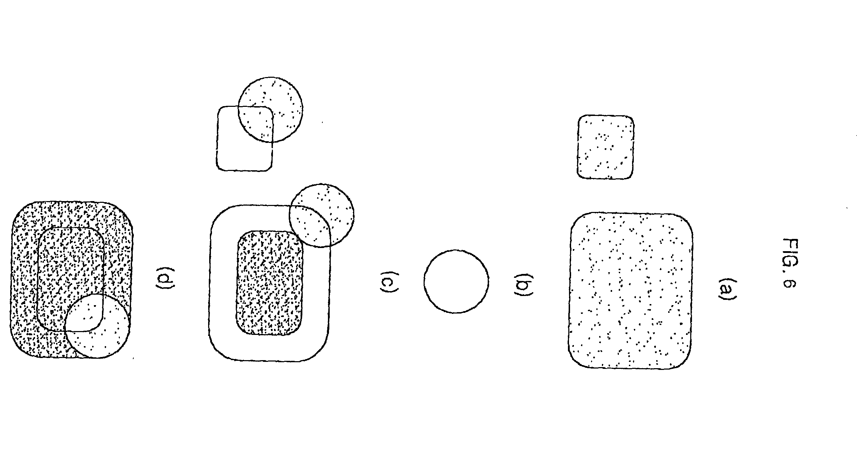

Figs. 6a-6d are a diagram for explaining a general opening morphology technique.

That is, as shown in Figs. 6a-6d, the step of deleting a portion under a certain critical value in size can he simply performed by using an opening morphology technique using an element the diameter of which is above the corresponding critical value. The opening can be performed through an 'Erosion' process (referring to Fig. 6c) of reducing a portion from the boundary of the portion by a radius of the element and a 'Dilation' process (referring to Fig. 6d) of dilating a remained portion from the boundary of the portion by a radius of the element, by using the given element (referring to Fig. 6b).

However, in order to more surely verify a face detected through such processes, a face template can be further used. That is, a face is detected after the step of cognizing a face by using a face template to detect a face from the detected skin portion (step 105).

Further, in the step of cognizing a face, if the condition that the size of the segmented portion and the aspect ratio are within a desired range is met, it may be established that a segmented portion is judged as a face.

However, in case that a skin portion is mainly appeared with a face, such as image communications, when the present method is used to track the position of a face, a face may be effectively detected by omitting the step of cognizing a face and using an only portion of a human color.

As described above, in the face detecting method depending on image according to the present invention, in a moving picture process system and an image communication system, such as VOD (Video On Demand), and PVR (Personal Video Recorder), it is advantageous to effectively detect a face by adaptively designating a range of a human color suitable for a given image after analyzing a color distribution in the given image, and by using a skin color.

That is, the face detecting method depending on image according to the present invention has an advantage that the processing time is short due to the basis of a human color portion and the human color portion can be exactly detected by optimal range of the human color for the input image. More particularly, in case that a skin portion is mainly appeared with a face, such as image communications, when a face is detected to track the position of a face, a face can be effectively segmented.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. In a face detecting method capable of effectively detecting a face by skin color in a moving picture process system and an image communication system, a face detecting method depending on an image, comprising:

   a step of obtaining a color group mainly distributed in the image;
   a step of designating a color group corresponding to a human color in the obtained color groups;
   a step of segmenting a portion composed with pixels corresponding to color group of a human color; and
   a step of cognizing a face for judging whether the segmented portion corresponds to a face or not by comparing the segmented portion with a face template.

2. The face detecting method depending on an image according to claim 1, wherein the step of obtaining mainly distributed color group, comprising:

   a step of composing a color histogram of the image;
   a step of obtaining an bin ($b_{max}$) having the maximum bin value of the color histogram;
   a step of measuring similarity between a representative color value of the $b_{max}$ and a representative color value of other respective bins;
   a step of designating the range of color of a main color by using bins, where measured similarity is below a critical value, and $b_{max}$; and
   a step of designating a representative color of the main color.

3. The face detecting method depending on an image according to claim 2, wherein a step of detecting bin corresponding to the extracted main color from the color histogram, a step of calculating the maximum bin for the rest of bins, and a step of designating a main color group in addition when the maximum bin is above a critical value are further comprised.

4. The face detecting method depending on an image according to claim any one of claims 1 to 3, wherein in the step of designating a color group corresponding to the portion of a human color of the obtained color groups, if the representative color of the obtained color group belongs to the predetermined range of a human color, the representative color is designated as color group of a human color portion.

5. The face detecting method depending on an image according to claim 4, wherein the predetermined range of a human color is judged as a human color when B > G, G > 100, and B+15 < R < B+50 where a color coordinate is RGB and ranges of each coordinates of R, G, and B belong between 0 and 255, respectively.

6. The face detecting method depending on an image according to claim 4 wherein the predetermined range of a human color is judged as a human color when G > B, B > 100, and G+15 < R < G+50 where a color coordinate is RGB and ranges of each coordinates of R, G, and B belong between 0 and 255, respectively.

7. The face detecting method depending on an image according to claim 4, wherein the predetermined range of a human color is judged as a human color when $134 < Cb < 155$, $91 < Cr < 142$, and $60 < Y < 230$, where color coordinate is YCrCb and can be expressed by 24 bits.

8. The face detecting method depending on an image according to any one of the preceding claims, wherein the step of cognizing a face is to judge the segmented portion as a face when the size of the segmented portion and an aspect ratio meet a condition within a desired range.

9. The face detecting method depending on an image according to any one of claim 1 to 7, wherein the step of cognizing a face is to judge a segmented portion under a critical value as an anti-face and delete a portion under the critical value,

10. The face detecting method depending on an image according to claim 9, wherein the step of deleting a portion under a critical value is to be performed by using an opening morphology technique.

FIG. 1

```
      ┌─────────────┐
      │    Start     │
      └──────┬──────┘
             │
   ┌─────────────────────┐
   │   Input an image    │──── S101
   └──────────┬──────────┘
             │
   ┌─────────────────────┐
   │  Main color grouping │──── S102
   └──────────┬──────────┘
             │
   ┌─────────────────────┐
   │  Designating a color │──── S103
   │ group of a human color│
   └──────────┬──────────┘
             │
   ┌─────────────────────┐
   │ Detecting a portion of│──── S104
   │    a human color     │
   └──────────┬──────────┘
             │
   ┌─────────────────────┐
   │  Cognizing a face   │──── S105
   └──────────┬──────────┘
             │
      ┌─────────────┐
      │     End      │
      └─────────────┘
```

FIG. 2

Start

Obtaining Normalized color Histogram — S201

Detecting bin $(b_{max})$ having maximum value — S202

S203 — $P(b_{max}) > \tau_1$ — No — End

Yes

Finding all Ci meeting the condition of $|Cb_{max} - Ci| < \tau_2$, where $Cb_{max}$ is a representative color of $b_{max}$, and i= for all histogram bin index — S204

Obtaining the set of $\{b_{max}, b_k\}$, where $k \in S$, S={all i meeting the above condition} — S205

Generating the representative color value of $\{b_{max}, b_k\}$, where $k \in S$, S={all i meeting the above condition}, $C_{dom} = p(b_{max}) * V(Cb_{max}) + \sum_{k \in S} p(b_k) * V(C b_k)$ — S206

Deleting $\{b_{max}, b_k\}$ from the histogram — S207

FIG.3a

FIG.3b

FIG.3c

FIG.4a

FIG.4b

FIG.4c

FIG.5a

FIG.5b

FIG. 5c

FIG. 6

(a)

(b)

(c)

(d)